# EUROPÄISCHE PATENTSCHRIFT

(11) **EP 0 555 448 B1**
(45) Veröffentlichungstag und Bekanntmachung des Hinweises auf die Patenterteilung: **14.06.1995**
(21) Anmeldenummer: 92918316.8
(22) Anmeldetag: 03.09.1992
(51) Int. Cl.: B62J 6/12

(54) **Fahrradnabe mit eingebauter Nabenlichtmaschine**
Bicycle wheel hub with integral hub dynamo
Moyeu de bicyclette comprenant une dynamo integrée

(30) Priorität: 04.09.1991 DE 9110953 U
(43) Veröffentlichungstag der Anmeldung: 18.08.1993
(73) Patentinhaber: WANGERMANN, Jochen R., D-25524 Itzehoe (DE)
(72) Erfinder: WANGERMANN, Jochen R., D-25524 Itzehoe (DE)
(74) Vertreter: Schmidt-Bogatzky, Jürgen, Dr. Ing.
(86) Internationale Anmeldenummer: EP9202033
(87) Internationale Veröffentlichungsnummer: WO9304908

(56) Entgegenhaltungen:
- EP-A- 0 425 260
- CH-A- 169 902
- DE-A- 2 429 298
- DE-A- 3 114 864
- DE-A- 3 241 909
- DE-A- 3 322 038
- FR-A- 1 325 732

## Beschreibung

Die Erfindung betrifft eine Fahrradnabe mit eingebauter Nabenlichtmaschine, die zwei zum Befestigen von Speichen für die Felgenhalterung dienende Nabenflansche aufweist und auf einer Achse des Laufrades montierbar ist, bei der ein Magnet als Magnetrotor ausgebildet und auf der Achse drehbar mit einem Planetengetriebe in Eingriff ist, wobei der Magnet einer Spule zugeordnet ist und in der Spule durch Rotation des Magneten Strom induziert wird und die Spule mit einem Stromabnahmekontakt verbunden ist.

Zur Stromerzeugung an Fahrrädern werden in der Regel Fahrraddynamos reibschlüssig angetrieben, wozu die Antriebswelle des Dynamos mit einem geriffelten Reibrad versehen ist. Bei diesen Fahrraddynamos besteht der Nachteil, daß sie bei Nässe und Schneematsch, verschlissenem Reibrad, ablösender Reifenriffelung, geringem Luftdruck sowie bereits leicht nachlassender Anpreßkraft des Dynamos nicht zuverlässig funktionieren und damit die Verfügbarkeit der Beleuchtung einschränken. Hinzu kommt, daß derartige Reibradantriebe einen schlechten Wirkungsgrad aufweisen. Zur Vermeidung dieser Nachteile ist es bereits vorgeschlagen worden, einen Fahrraddynamo gemäß der eingangs genannten Art auszubilden. Die Laufräder eines Fahrrades werden jedoch im Betrieb beschleunigt und verzögert. Wird der aus Materialgründen relativ schwere Magnetrotor durch ein vorgeschaltetes Getriebe auf die für die Stromversorgung gewünschte Drehzahl gebracht, so führen Drehzahländerungen zu beachtlichen Massenkräften, die vom Getriebe aufgenommen und abgebaut werden müssen. Diese Belastungen sind weit höher als die an sich erforderliche elektrische Leistungsabgabe des Generators von 3 W erwarten läßt. Da die Zahnräder des Planetengetriebes wegen der baulichen Enge in einer Fahrradnabe klein dimensioniert werden müssen, besteht bei plötzlichen Drehzahländerungen des Laufrades die Gefahr einer Beschädigung des Planetengetriebes. Um diesem Nachteil entgegenzuwirken, ist es nach der EP 0 425 260 A1 bekannt, zwischen den Planetenrädern und dem Sonnenrad des Planetengetriebes einen elastischen Ring vorzusehen, der mit den Planetenrädern und dem Sonnenrad in Wirkverbindung ist. Die Planetenräder liegen unter Druck an dem elastischen Ring an. Wenn bei Drehzahländerungen des Laufrades das aufgrund der Massenträgheit des Magnetrotors auf das Magnetgetriebe einwirkende Drehmoment eine bestimmte Größe überschreitet, tritt an dem elastischen Ring ein Schlupf der Planetenräder auf, so daß auf das Planetengetriebe keine dieses mechanisch beschädigenden Stöße übertragen werden. Bei dieser bekannten Nabenlichtmaschine besteht jedoch der Nachteil, daß sie bei einer Bewegung der Laufräder des Fahrrades ständig in Betrieb ist. Hierdurch wird einerseits das Radfahren zu Zeiten, wo keine Beleuchtung erforderlich ist, erschwert und andererseits das Planetengetriebe aufgrund der häufigen Schlupfvorgänge schnell verschlissen.

Die Aufgabe der Erfindung besteht darin, die Nabenlichtmaschine der eingangs genannten Art so zu verbessern, daß eine Beschädigung des Getriebes durch Änderungen der Drehzahl der Laufräder sicher vermieden wird und darüber hinaus die Lichtmaschine nur dann in Betrieb genommen zu werden braucht, wenn tatsächlich aufgrund der äußeren Lichtverhältnisse eine Stromerzeugung zur Fahrradbeleuchtung erwünscht ist.

Erfindungsgemäß erfolgt die Lösung der Aufgabe durch die kennzeichnenden Merkmale des Anspruchs 1. Vorteilhafte Ausgestaltungen der Erfindung werden in den abhängigen Ansprüchen beschrieben.

Nach der Erfindung ist es möglich, durch Verwendung einfacher Bauteile eine Nabenlichtmaschine in robuster Ausführung kostengünstig herzustellen. Die Erfindung wird nachstehend am Beispiel der in den Zeichnungen dargestellten Ausführungsformen erfindungsgemäßer Nabenlichtmaschinen näher erläutert. Es zeigt
- Fig. 1 bis 3: drei Ausführungsformen von Nabenlichtmaschinen in schematischen Seitenansichten im Schnitt,
- Fig. 4 und 5: zwei Ausbildungen der Magnetspulenanordnung und des Magnetrotors in schematischen Seitenansichten im Schnitt,
- Fig. 6a bis 6c: den Lagerkörper für das dem Stellglied zugeordnete Lager der Nabenlichtmaschine nach Fig. 2 in einer Draufsicht und zwei Queransichten,
- Fig. 7a bis 7c: den Lagerkörper für das dem Stromdurchführungsstück zugeordnete Lager der Nabenlichtmaschine nach Fig. 3 in einer Draufsicht, Seitenansicht im Schnitt und einer Queransicht,
- Fig. 8a und 8b: das Stellglied der Nabenlichtmaschine nach Fig. 2 in einer Seitenansicht und einer Queransicht,
- Fig. 9a und 9b: den Stellring für das Stellglied nach Fig. 8a und 8b in einer Seiten- und Queransicht,
- Fig. 10a und 10b: den Zuganker für das Stellglied nach Fig. 8a und 8b bin einer Seitenansicht und Draufsicht,
- Fig. 11a und 11b: das Stromdurchführungsstück für die Nabenlichtmaschine nach Fig. 2 und 3 in einer Seitenansicht und Draufsicht,
- Fig. 12a und 12b: die Abschlußscheibe für den Hohlzylinder der Nabenlichtmaschine nach Fig. 3 in einer Draufsicht und Queransicht im Schnitt,
- Fig. 13a bis 13g: die Ausbildung des stromabnahmeseitigen Abschnitts einer weiteren Nabenlichtmaschine in einer Seitenansicht im Schnitt mit zugehörigen Bauelementen in verschiedenen Ansichten.

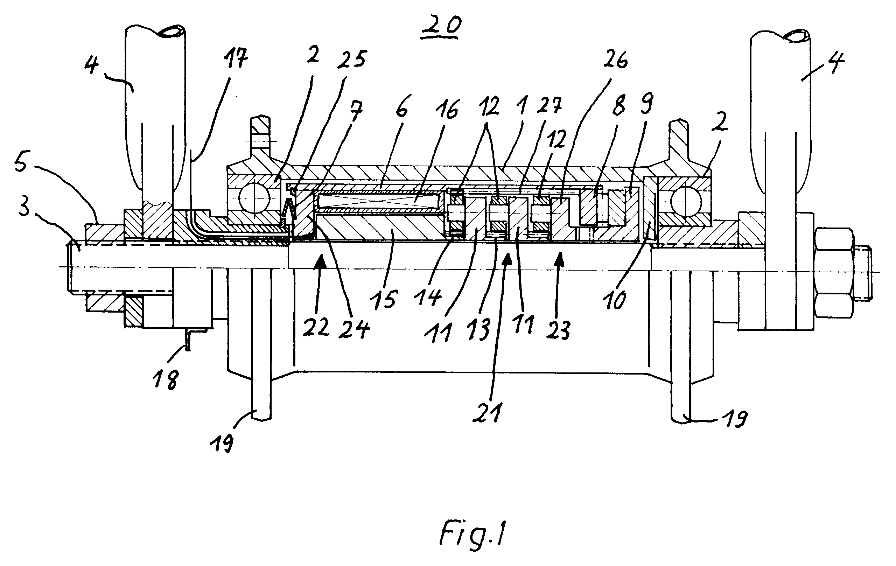

Die Nabenlichtmaschine 20 nach Fig. 1 weist einen Nabenkörper 1 auf, der in bekannter Weise mittels Lagern 2 an einer Achse 3 befestigt ist. Die Achse 3 wird mittels Schraubverschlüssen 5 an den Streben einer Gabel 4 eines Fahrrades befestigt. An den Seitenabschnitten des Nabenkörpers 1 sind Nabenflansche 19 ausgebildet, die zur Verbindung der Felge mit dem Nabenkörper 1 mittels nicht näher dargestellter Speichen dient. In dem Nabenkörper 1 ist ein Planetengetriebe 21 angeordnet, durch das ein als Magnetrotor 15 ausgebildeter Magnet auf der Achse 3 in Rotation versetzt wird, so daß in einer fest stehenden Spulenanordnung 16 Strom induziert wird.

Die Spulenanordnung 16 ist im Innenraum eines Hohlzylinders 6 angeordnet, der den Magnetrotor 15 umgibt. An dem einen Endabschnitt 22 des Hohlzylinders 6 ist ein Ringflansch 24 ausgebildet, der fest an dem Hohlzylinder 6 und der Spulenanordnung 16 anliegt. Der Ringflansch 24 ist auf der Achse 3 axial verschiebbar aber gegen Verdrehen gesichert gelagert. Zur Lagefixierung in dem Hohlzylinder 6 ist in diesem ein Sicherungsring 25 vorgesehen, der am äußeren Randabschnitt des Ringflansches 24 anliegt. Zwischen dem fest stehenden Lagerkörper des dem Ringflansch 24 zugeordneten Lagers 2 und dem Ringflansch 24 ist eine als Druckfeder ausgebildete Feder 7 angeordnet. An dem anderen Endabschnitt 23 des Hohlzylinders 6 ist dieser mit einem Axiallager 8 verbunden, das an einer Kupplung 9 gelagert ist. Durch die Feder 7 wird die Kupplung 9 auf eine Kupplungsscheibe 10 gepreßt, die drehbar um die Achse 3 mit dem Nabenkörper 1 verbunden ist. Die einander zugewandten Flächen der Kupplung 9 und der Kupplungsscheibe 10 sind vorzugsweise mit einem verschleißfesten Reibbelag beschichtet.

Die Kupplung 9 ist mit einem ersten Planetenträger 26 des z. B. dreistufigen Planetengetriebes 21 verbunden. An diesem Planetenträger 26 ist der Kupplung 9 abgewandt ein Planetenrad 12 angeordnet, das mit einem Sonnenrad 13 und der Innenverzahnung 27 des Hohlzylinders 6 in Wirkeingriff ist. Dieses Sonnenrad 13 ist an einem weiteren Planetenträger 11 ausgebildet, der an der dem genannten Sonnenrad 13 abgewandten Fläche ein weiteres Planetenrad 12 aufweist. Dieses Planetenrad 12 ist ebenfalls mit einem Sonnenrad 13 eines Planetenträgers 11 im Wirkeingriff, das ein weiteres Planetenrad 12 aufweist, das mit einem am Magnetrotor 15 ausgebildeten Zahnritzel 14 in Eingriff ist. Die planetenträger 26, 11 unterscheiden sich in sofern, als der Planetenträger 26 formschlüssig mit der Kupplung 9 verbunden ist und kein Sonnenrad aufweist. Es ist aber auch eine kraftschlüssige Verbindung möglich. Mittels der genannten und und um die Achse 3 rotierbaren Planetenträger 26, 11 sowie der zugehörigen Planetenräder 12 kann der Magnetrotor 15 in die gewünschte Rotation versetzt werden, die das Vielfache der Laufraddrehzahl erreicht und damit in der Spulenanordnung 16 den für die Fahrradbeleuchtung gewünschten Strom induziert. In der radial zur Achse 3 gerichteten Ebene eines jeden dargestellten Planetenrades 12 sind an den Planetenträgern 26, 11 jeweils vorzugsweise 3 Planetenräder 12 angeordnet, die mit der Innenverzahnung 27 des Hohlzylinders 6 im Eingriff sind.

Der Spulendraht der Spulenanordnung 16 ist in bekannter nicht näher dargestellter Weise an einem Endabschnitt gegen Masse geschaltet und am anderen Endabschnitt mit dem Stromabnahmekontakt 18 verbunden.

Die Feder 7 ist als Tellerfeder ausgebildet und so dimensioniert, daß sie im unbeschleunigten Dynamobetrieb im Bereich der Kupplung 9 einen Schlupf verhindert. Bei Beschleunigungen erfolgt jedoch zwischen Kupplung 9 und Kupplungsscheibe 10 ein Schlupf, so daß die Kupplung 9 als Rutschkupplung dient und eine Überlastung des Planetengetriebes 21 verhindert.

Falls die Stromerzeugung unterbrochen werden soll, ist es möglich, mittels eines Stellgliedes die Kupplung 9 außer Wirkeingriff mit der Kupplungsscheibe 10 zu bringen. Hierzu kann als Stellglied beispielsweise ein Bowdenzug 17 vorgesehen werden, dessen einer Endabschnitt mit dem Ringflansch 24 verbunden ist. Durch Betätigung des Bowdenzuges 17 wird der Ringflansch 24 gegen den Druck der Feder 7 axial verschoben, wodurch über den Hohlzylinder 6 die Kupplung 9 von der Kupplungsscheibe 10 gelöst wird. Es ist somit möglich, mittels einer Fernbedienung die Nabenlichtmaschine 20 außer Betrieb zu nehmen, wodurch der Generatorteil relativ zur Achse 3 vollkommen zur Ruhe kommt und während der Laufbewegung des Laufrades keine vermeidbare Antriebsleistung erfordert.

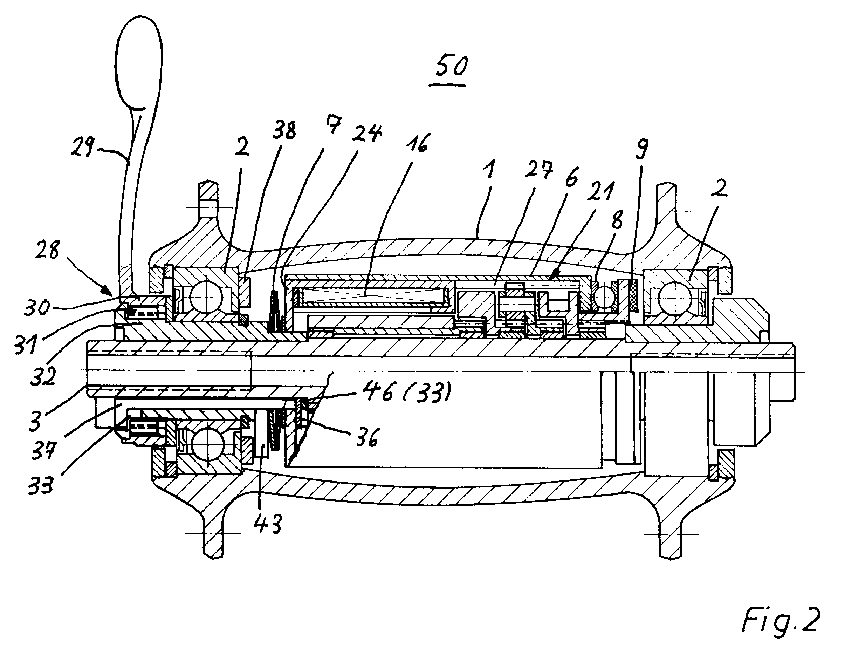

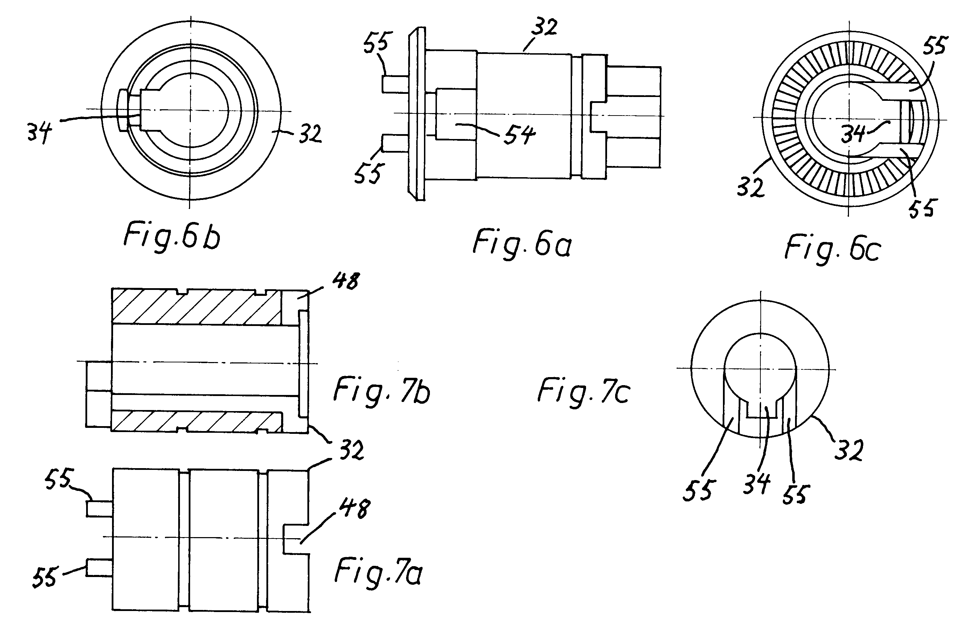

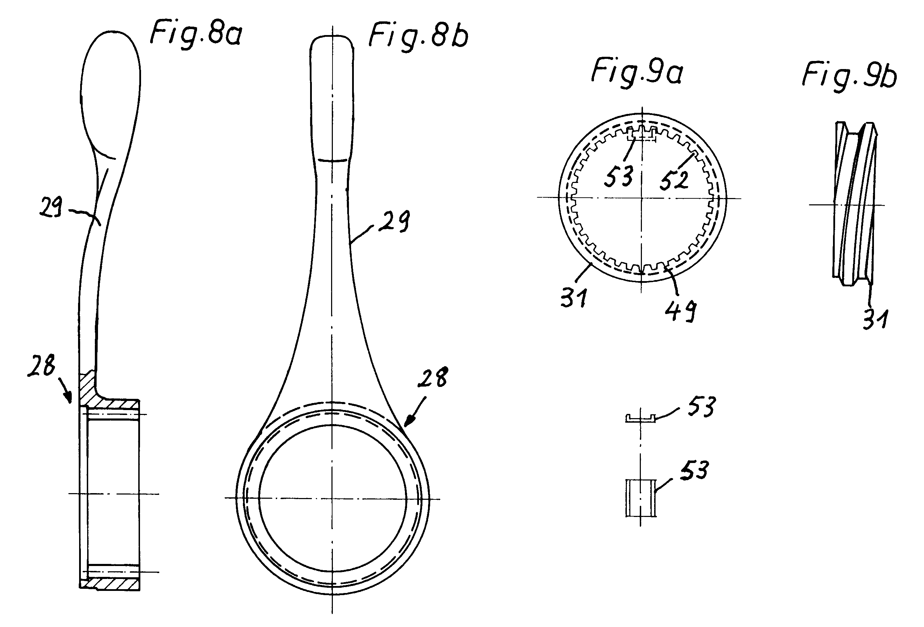

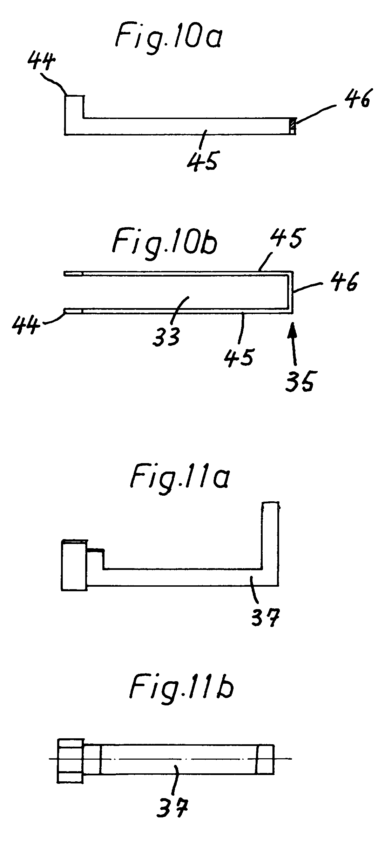

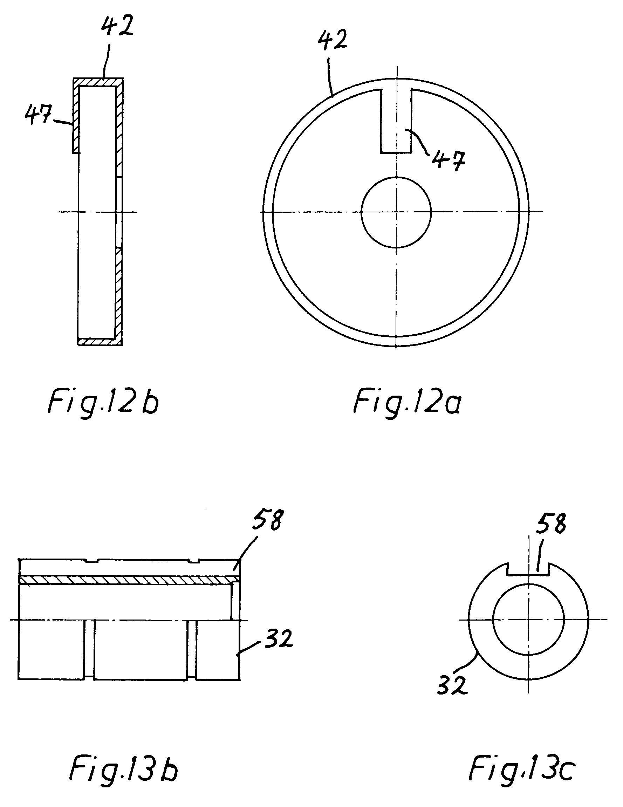

Bei der in Fig. 2 dargestellten Nabenlichtmaschine 50 ist als Stellglied für die Kupplung 9 eine Stellschraube 28 mit Stellhebel 29 vorgesehen, die in Fig. 8a und 8b dargestellt ist. Die Stellschraube 28 ist mit einem Stellring 31 in Wirkeingriff, der durch Betätigung der Stellschraube 28 koaxial zur Achse 3 auf dem Lagerkörper 32 verschiebbar ist. Hierzu weist der Stellring 31 (Fig. 9a und 9b) innenseitig eine trapezförmige Verzahnung 49 auf. In zwei Zahnnuten 52 ist ein im Querschnitt U-förmiges Gleitstück 53 einsetzbar. Auf dem Lagerkörper 32 wird der Stellring 31 mittels des Gleitstücks 53 in der Nut 54 axial verschieblich geführt. Der Stellring 31 ist mit Stegen 44 eines Zugankers 33 in Eingriff. Der Zuganker 33 (Fig. 10a und Fig. 10b) ist als U-förmiges Profilstück ausgebildet, an dessen zueinander parallelen Schenkeln 45 endabschnittseitig die Stege 44 ausgeformt sind. Der Zuganker 33 ist in einer Nut des Lagerkörpers 32 (Fig. 6a bis 6c) geführt und hintergreift mit seinem Quersteg 46 eine Nasenscheibe 36, die an dem Ringflansch 24 des Hohlzylinders 6 anliegt. Bei axialer Verschiebung des Zugankers 33 durch Betätigung der Stellschraube 28 drückt die Feder 7 über den Hohlzylinder 6 die Kupplung 9 gegen das Lager 2, worauf die Nabenlichtmaschine 50 in Betrieb ist. Zur Außerbetriebsetzung wird die Stellschraube 28 zurückgedreht, wodurch der Zuganker 33 über den Kohlzylinder 6 die Kupplung 9 gegen den Druck der Feder 7 vom Lager 2 löst. Die Stromabführung erfolgt über ein Stromdurchführungsstück 37 (Fig. 11a und 11b), das ebenfalls in die Nut 34 des Lagerkörpers 32 eingelegt ist. Die äußeren Kontaktstücke des Stromdurchführungsstücks 37 werden zwischen zwei außenseitig vorragenden Führungsstegen 55 aus dem Lagerkörper 32 herausgeführt. Die Führungsstücke 55 dienen zur Führung des Lagerkörpers 32 in der Vorderradgabel. Auf der Achse 3 ist der Lagerkörper 32 mittels einer Klemmverbindung befestigt. Am äußeren Lagerring des der Stellschraube 28 zugeordneten Lagers 2 ist ein Magnet 38 vorgesehen, der als Impulsgeber für einen Fahrgeschwindigkeitsanzeiger dient.

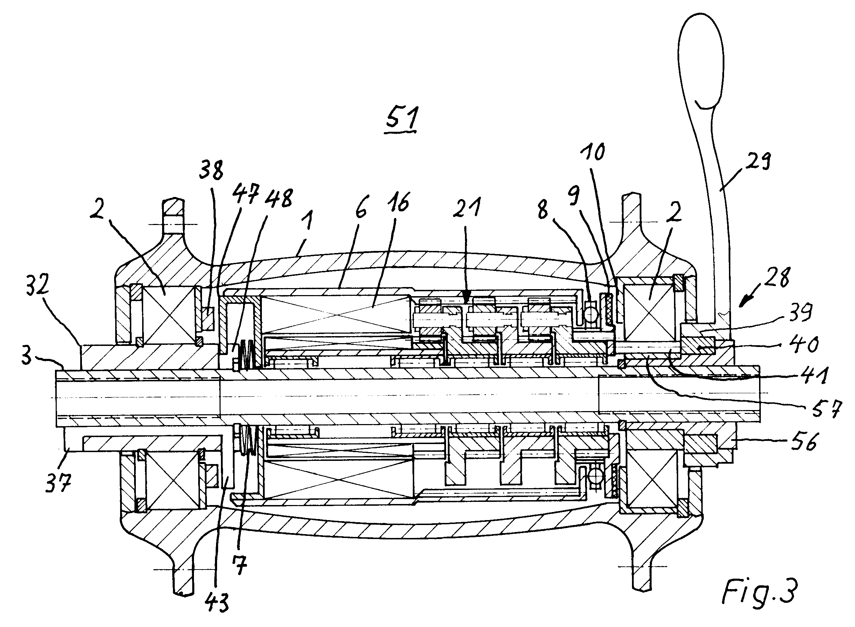

Bei der Nabenlichtmaschine 51 nach Fig. 3 ist das Stellglied als Buchse 39 mit einem Stellhebel 29 ausgebildet. Die Buchse 39 ist mit einer Kurvenscheibe 40 in Wirkeingriff und mit dieser auf einer weiteren Buchse 56 drehbar, die mit der Achse 3 mittels einer Klemmverbindung verbunden ist. Auf der Buchse 56 ist ein Tragring 57 befestigt, in dem über den Umfang des Tragrings 57 verteilt Stifte 41 parallel zur Achse 3 verschieblich angeordnet sind. Die Stifte 41 liegen an der Kurvenscheibe 41 an. Die Stifte 41 liegen ebenfalls gegen den Druck der Feder 7 an der Kupplung 9 an. Bei Verstellung der Kurvenscheibe 40 ist es somit möglich, durch die Stifte 41 die Kupplung 9 von der Kupplungsscheibe 10 zu lösen oder aber an dieser zur Anlage zu bringen. Es ist möglich, in der Verbindung zwischen Buchse 39 und Kurvenscheibe 40 einen Freilauf vorzusehen, so daß bei entsprechender Ausbildung der Kurvenscheibe 40 bei einer Betätigung des Stellgriffs 29 die Stifte 41 alternierend mit der Kupplung 9 in Eingriff gebracht oder von diesem wieder gelöst werden. Bei einer derartigen Ausbildung des Stellglieds ist auch auf einfache Art die Verbindung mit einer Fernbedienung möglich. Die Feder 7 liegt an einer Abschlußscheibe 42 (Fig. 12a und 12b) an, die endabschnittseitig in dem Hohlzylinder 6 angeordnet ist. Hierbei liegt die Abschlußscheibe 42 ebenfalls an der Spulenanordnung 16 an. Die Abschlußscheibe 42 weist einen Finger 47 auf, der in eine Nut 48 des dem Stromdurchführungsstück 37 zugeordneten Lagerkörpers eingreift. Bei dieser Nabenlichtmaschine 51 ist der dem Stromdurchführungsstück 37 zugeordnete Lagerkörper 32 vereinfacht ausgebildet (Fig. 7a bis 7c).

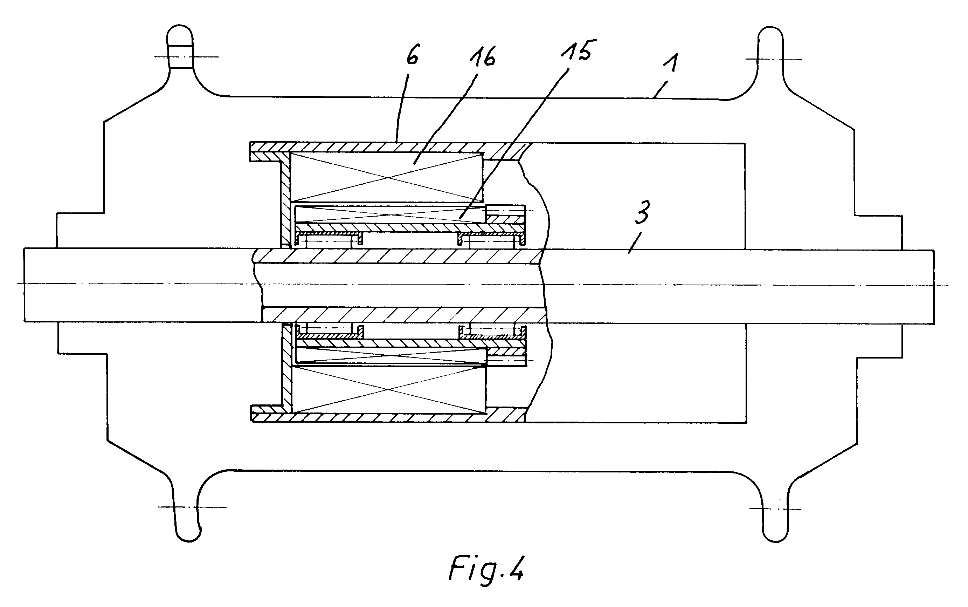

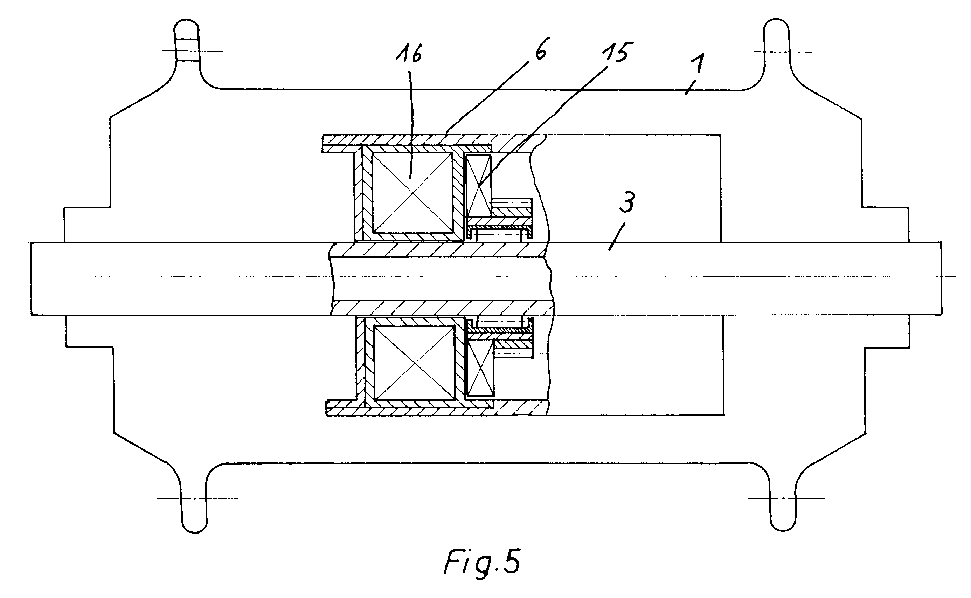

Fig. 4 und 5 zeigen wie durch konstruktive Variationen von Spulenanordnung 16 und Magnetrotor 15 die Baulänge verkürzt werden kann. Bei der Ausführung nach Fig. 5 kann der Magnetrotor 15 auch als eine Scheibe ausgebildet sein.

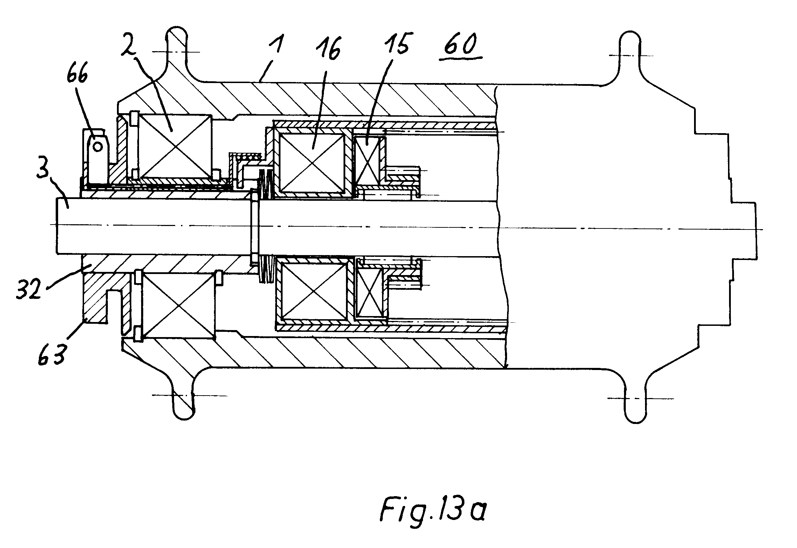

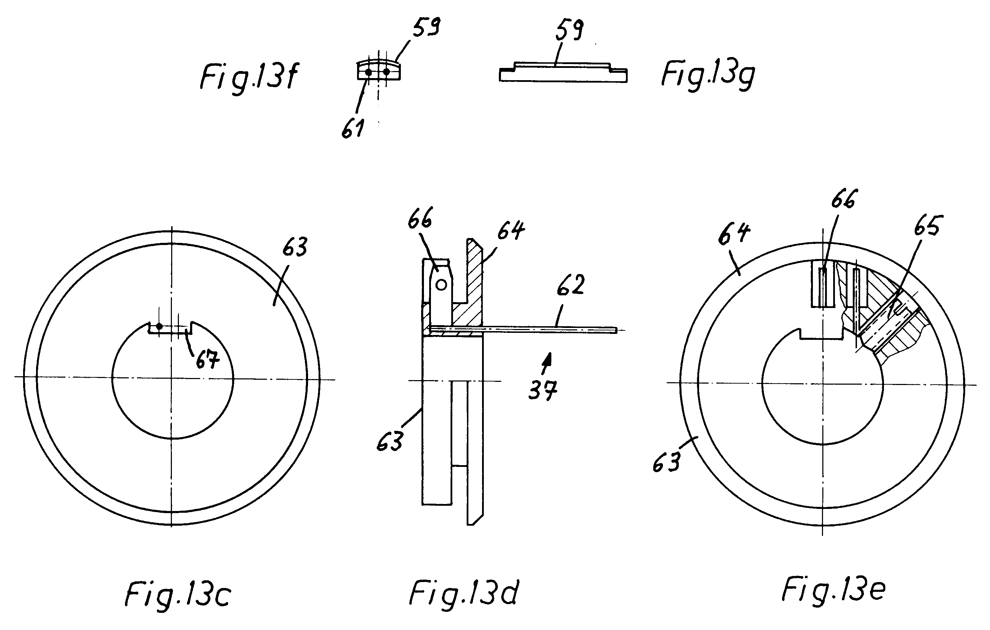

Bei der in Fig. 13a im Ausschnitt dargestellten Nabenlichtmaschine 60 ist die Stromabnahmeeinheit noch weiter vereinfacht. Der Lagerkörper 32 weist eine äußere Nut 58 auf, in die als Distanzstück ein Isolierstück 59 mit Durchbrechungen 61 für Kontaktstäbe 62 einer Kontaktscheibe 63 ausgebildet ist.Die Kontaktscheibe 63 wird auf den Lagerkörper 32 geschoben und dichtet mit einer radialen Flanschscheibe 64 das Lager 2 ab. Mittels einer Schraube 65 wird das Massekabel festgelegt. Die Stecker 66 sind vor der Flanschscheibe 64 angeordnet. Zur Führung der Kontaktscheibe 63 auf dem Lagerkörper 32 ist ein Flanschsteg 67 vorgesehen, der in die Nut 58 des Lagerstücks 32 eingreift (Fig. 13b bis 13g).

## Patentansprüche

1. Fahrradnabe mit eingebauter Nabenlichtmaschine (20, 50, 51), die zwei zum Bestigen von Speichen für die Felgenhalterung dienende Nabenflansche (19) aufweist und auf einer Achse (3) des Laufrades montierbar ist, bei der ein Magnet als Magnetrotor (15) ausgebildet und auf der Achse (3) drehbar mit einem Planetengetriebe (21) in Eingriff ist, wobei der Magnet einer Spule zugeordnet ist und in der Spule durch Rotation des Magneten Strom induziert wird und die Spule mit einem Stromabnahmekontakt verbunden ist, dadurch gekennzeichnet, daß der Magnetrotor (15) mittels eines an diesem ausgebildeten Zahnritzels (14) mit dem Planetengetriebe (21) in Eingriff ist, daß der Magnetrotor (15) von einer festen Spulenanordnung (16) umgeben ist, die an einem im Nabenkörper (1) fest angeordneten Hohlzylinder (6) ausgebildet ist, der in einem Endabschnitt (22) mit einem Ringflansch (24), der auf der Achse (3) mittels einer Feder (7) axial verschieblich ist, und am anderen Endabschnitt (23) mit einer auf der Achse (3) verschieblichen Kupplung (9) verbunden ist, die mit einem ersten Planetenträger (26) des Planetengetriebes (21) verbunden ist und mit einer mit dem Nabenkörper (1) verbundenen Kupplungsscheibe (10) in Wirkeingriff bringbar ist.

2. Nabenlichtmaschine nach Anspruch 1, dadurch gekennzeichnet, daß der Hohlzylinder (6) mittels eines Stellgliedes axial gegen den Druck der Feder (7) verschieblich ist.

3. Nabenlichtmaschine nach Anspruch 2, dadurch gekennzeichnet, daß das Stellglied als Bowdenzug (17) ausgebildet ist, dessen einer Endabschnitt mit dem Ringflansch (24) verbunden ist.

4. Nabenlichtmaschine nach Anspruch 1, dadurch gekennzeichnet, daß die das Zahnritzel (14) des Magnetrotors (15) antreibenden Planetenräder (12) an einem auf der Achse (3) drehbaren Planetenträger (11) gelagert ist, dessen den Planetenrädern (12) abgewandter Abschnitt als Sonnenrad (13) ausgebildet ist, das mit weiteren Planetenrädern (12) in Wirkverbindung ist.

5. Nabenlichtmaschine nach Anspruch 4, dadurch gekennzeichnet, daß die weiteren Planetenräder (12) an einem weiteren auf der Achse (3) drehbaren Planetenträger (11) gelagert sind, dessen den weiteren Planetenrädern (12) abgewandter Abschnitt als Sonnenrad (13) ausgebildet ist, das mit den Planetenrädern (12) des ersten Planetenträgers (26) in Eingriff ist.

6. Nabenlichtmaschine nach einem der Ansprüche 4 oder 5 dadurch, gekennzeichnet, daß die Planetenräder (12) mit einer an dem Hohlzylinder (6) ausgebildeten Innenverzahnung (27) im Eingriff sind.

7. Nabenlichtmaschine nach Anspruch 1, dadurch gekennzeichnet, daß die einander zugewandten Flächen der Kupplung (9) und der Kupplungsscheibe (10) mit einem verschleißfesten Reibbelag beschichtet sind.

8. Nabenlichtmaschine nach Anspruch 1, dadurch gekennzeichnet, daß der Ringflansch (24) fest mit dem Hohlzylinder (6) und der Spulenordnung (12) verbunden ist.

9. Nabenlichtmaschine nach Anspruch 1 und 2, dadurch gekennzeichnet, daß das Stellglied als mit einem Stellhebel (29) verbundene Stellschraube (28) ausgebildet ist, die koaxial zur Achse (3) auf diese angeordnet und mittels eines Gewindes (30) mit einem Stellring (31) in Eingriff ist, der auf einem Lagerkörper (32) axial verschieblich angeordnet und mit einem Zuganker (33) in Eingriff ist, der durch eine Nut (34) in dem Lagerkörper (32) und mit seinem dem Stellring (31) angewandten Endabschnitt (35) eine Nasenscheibe (36) hintergreift, die an dem von der Feder (7) druckbeaufschlagten Ringflansch (24) des Hohlzylinders (6) anliegt.

10. Nabenlichtmaschine nach Anspruch 9, dadurch gekennzeichnet, daß in der Nut (34) des Lagerkörpers (32) ein Stromdurchführungsstück (37) angordnet ist.

11. Nabenlichtmaschine nach Anspruch 10, dadurch gekennzeichnet, daß an dem auf dem Lagerkörper (32) angeordneten Lager (2) mindestens ein Magnet (38) als Impulsgeber vorgesehen ist, der bei Rotation des Nabenkörpers (1) an einem Steg (43) des Stromdurchführungsstücks (37) vorbei bewegt wird.

12. Nabenlichtmaschine nach Anspruch 1 und 2, dadurch gekennzeichnet, daß das Stellglied als mit einem Stellhebel (29) verbundene drehbare Buchse (39) ausgebildet ist, die mit einer Kurvenscheibe (40) verbunden ist, an der über den Umfang der Achse (3) verteilt angordnete durch die Kurvenscheibe (40) parallel zur Achse (3) verschiebbare Stifte (41) anliegen, die an der Kupplung (9) gegen den Druck der Feder (7) anliegen.

## Claims

1. A bicycle hub with a built-in hub lighting device (20, 50, 51), having two hub flanges (19) which are used for fixing spokes of the rim mounting and which may be mounted on one axle (3) of the driving wheel, in which a magnet is arranged as a magnet rotor (15) and is rotatably engaged on the axle (3) with a planetary gear (21), in which the magnet is connected to a coil and an electric current is induced in the coil by rotation of the magnet and the coil is connected to a current collector contact, characterised in that the magnet rotor (15) engages with the planetary gear (21) by means of a gear pinion (14) arranged on it, that the magnet rotor (15) is surrounded by a fixed coil arrangement (16), which is arranged on a hollow cylinder (6) fixed inside the hub body (1), this cylinder being joined at one end section (22) with an annular flange (24) which is axially movable on the axle (3) by means of a spring (7) and at the other end section (23) with a clutch (9) that is slidable on the axle (3),which is connected to a first planet carrier (26) of the planetary gear (21) and to a clutch disc (10) that may be engaged with the hub body (1) in operation.

2. A hub lighting device as claimed in claim 1, characterised in that the hollow cylinder (6) is slidable in an axial direction against the bias of the spring (7) by means of a positioning member.

3. A hub lighting device as claimed in claim 2, characterised in that the positioning member is a Bowden pull (17), one end section of which is joined to the annular flange (24).

4. A hub lighting device as claimed in claim 1, characterised in that the planet gears (12) driving the gear pinion (14) of the magnet rotor (15) are mounted on a rotatable planet carrier (11) on the axle (3), whose section facing away from the planet gears (12) is a sun gear (13), which connects with other planet gears (12) in operation.

5. A hub lighting device as claimed in claim 4, characterised in that the other planet gears (12) are mounted on another rotatable planet carrier (11) on the axle (3), whose section facing away from the other planet gears (12) is a sun gear (13), which engages with the planet gears (12) of the first planet carrier (26).

6. A hub lighting device as claimed in one of claims 4 or 5, characterised in that the planet gears (12) engage with a tooth arrangement (27) on the inside of the hollow cylinder (6).

7. A hub lighting device as claimed in claim 1, characterised in that the surfaces of the clutch (9) and clutch disc (10) facing each other are coated with an abrasion-resistant contact layer.

8. A hub lighting device as claimed in claim 1, characterised in that the annular flange (24) is firmly connected to the hollow cylinder (6) and the coil arrangement (12).

9. A hub lighting device as claimed in claims 1 and 2, characterised in that the positioning member is a positioning lever (29) connected to a positioning screw (28) arranged on the lever coaxially to the axle (3) and engaging with the thread (30) of a positioning ring (31), which is arranged on a support body (32) so as to be axially slidable and engage with an anchoring device (33), which, by means of a groove (34) in the support body (32) and its end section (35) facing away from the positioning ring (31) engages the rear of a stub disc (36) adjoining the annular flange (24) of the hollow cylinder (6) biassed by the spring (7).

10. A hub lighting device as claimed in claim 9, characterised in that the groove (34) of the support body (32) has an electricity conducting part (37).

11. A hub lighting device as claimed in claim 10, characterised in that the bearing (2) arranged on the support body (32) is provided with at least one magnet (38) as a pulse source, which, on rotation of the hub body (1), moves past a cross-piece (43) of the electricity conducting part (37).

12. A hub lighting device as claimed in claims 1 and 2, characterised in that the positioning member is a positioning lever (29) connected to a rotatable bush (39) which is connected to a cam (40), against which pins (41), distributed over the circumference of the axle (3) and movable through the cam (40) parallel to the axle (3), are arranged, these pins abutting with the clutch (9) against the bias of the spring (7).

## Revendications

1. Moyeu de bicyclette avec dynamo d'éclairage intégrée (20, 50, 51) qui présente deux flasques de moyeu (19) permettant la fixation de rayons pour le support de la jante et est montée sur un axe (3) de la roue, pour lequel un aimant se présente sous la forme d'un rotor magnétique (15) et est en prise rotative sur l'axe (3) avec un engrenage planétaire (21), l'aimant étant associé à une bobine, du courant étant induit dans la bobine par rotation de l'aimant et la bobine étant reliée à un contact collecteur de courant, caractérisée en ce que le rotor magnétique (15) étant en prise avec avec l'engrenage planétaire (21) au moyen d'un pignon (14) conçu sur celui-ci, en ce que le rotor magnétique (15) est entouré d'un bobinage fixe (16) qui est formé sur un cylindre creux (6) disposé de façon fixe dans le corps du moyeu (1), cylindre creux qui est relié par une section terminale (22) à une bride annulaire (24) qui est mobile axialement sur l'axe (3) au moyen d'un ressort (7) et, par l'autre section terminale (23), à un embrayage (9) mobile sur l'axe (3), embrayage qui est relié à une première cage de transmission planétaire (26 ) de l'engrenage planétaire (21) et peut être amené en prise avec un disque d'embrayage (10) relié au corps du moyeu (1).

2. Dynamo d'éclairage pour moyeu de bicyclette selon la revendication 1, caractérisée en ce que le cylindre creux (6) est mobile axialement contre la pression du ressort (7), au moyen d'un membre de réglage.

3. Dynamo d'éclairage pour moyeu de bicyclette selon la revendication 2, caractérisée en ce que le membre de réglage se présente sous la forme d'un câble Bowden (17) dont l'une des sections terminales est reliée à la bride annulaire (24).

4. Dynamo d'éclairage pour moyeu de bicyclette selon la revendication 1, caractérisée en ce que les roues planétaires (12) entraînant le pignon (14) du rotor magnétique (15) sont logées sur une cage de transmission planétaire (11) rotative sur l'axe (3) et dont la section opposée aux roues planétaires (12) se présente sous la forme d'une roue solaire (13) qui est en relation active avec des roues planétaires supplémentaires (12).

5. Dynamo d'éclairage pour moyeu de bicyclette selon la revendication 4, caractérisée en ce que les roues planétaires supplémentaires (12) sont logées sur une autre cage de transmission planétaire (11) rotative sur l'axe (3), cage dont la section opposée aux roues planétaires supplémentaires (12) se présente sous la forme d'une roue solaire (13) qui est en prise avec les roues planétaires (12) de la première cage de transmission planétaire (26).

6. Dynamo d'éclairage pour moyeu de bicyclette selon l'une des revendications 4 ou 5, caractérisée en ce que les roues planétaires (12) sont en prise avec un engrenage intérieur (27) formé sur le cylindre creux (6).

7. Dynamo d'éclairage pour moyeu de bicyclette selon la revendication 1, caractérisée en ce que les surfaces, orientées les unes vers les autres, de l'embrayage (9) et du disque d'embrayage (10) sont couvertes d'une garniture de friction résistant à l'usure.

8. Dynamo d'éclairage pour moyeu de bicyclette selon la revendication 1, caractérisée en ce que la bride annulaire (24) est reliée de façon fixe au cylindre creux (6) et au bobinage (12).

9. Dynamo d'éclairage pour moyeu de bicyclette selon les revendications 1 et 2, caractérisée en ce que le membre de réglage (29) se présente sous la forme d'une vis de réglage (28) reliée à un levier de commande (29) et qui est disposée sur l'axe (3), coaxialement par rapport à celui-ci (3), et est en prise, au moyen d'un filet, avec un anneau de serrage (31) qui est disposé axialement de façon mobile sur un corps d'appui (32) et est en prise avec un tirant d'ancrage (33) qui mord par l'arrière à travers une rainure (34) dans le corps d'appui (32), dans un couvre-cuvette (36) et avec sa section terminale (35) tournée vers l'anneau de serrage (31), couvre-cuvette qui est adjacent à la bride annulaire (24) du cylindre creux (6) mise en pression par le ressort (7).

10. Dynamo d'éclairage pour moyeu de bicyclette selon la revendication 9, caractérisée en ce qu'une pièce de passage du courant (37) est disposée dans la rainure (34) du corps d'appui (32).

11. Dynamo d'éclairage pour moyeu de bicyclette selon la revendication 10, caractérisée en ce qu'au moins un aimant (38) est prévu en tant que contacteur sur le support (2) disposé sur le corps d'appui (32), aimant qui est déplacé, lors de la rotation du corps du moyeu (1), en passant devant une traverse (43) de la pièce de passage du courant (37).

12. Dynamo d'éclairage pour moyeu de bicyclette selon les revendications 1 et 2, caractérisée en ce que le membre de réglage se présente sous la forme d'une douille rotative reliée à un levier de commande (29), douille qui est reliée à un disque à came (40) sur lequel sont appliquéees des broches (41) mobiles parallèlement à l'axe par l'intermédiaire du disque à came (40), réparties au-dessus de la périphérie de l'axe (3) et qui sont adjacentes à l'embrayage (9) contre la pression du ressort (7).
